# EUROPEAN PATENT APPLICATION

(11) **EP 4 752 287 A1**
(43) Date of publication of application: **03.06.2026**
(21) Application number: 25216696.2
(22) Date of filing: 18.11.2025
(51) Int. Cl.: E02B 17/02, B66C 1/10, F03D 13/10, E02B 17/00

(54) **PLATFORM INSTALLATION TOOL**

(30) Priority: 29.11.2024 NL 2039205
(71) Applicant: Baggermaatschappij Boskalis B.V., 3356 LK Papendrecht (NL)
(72) Inventor: NASROLLAHI, Sina, 3356 LK PAPENDRECHT (NL)
(74) Representative: Geurts, Franciscus Antonius

(57) **Abstract**

The invention relates to a platform installation tool for handling an internal monopile platform and an external monopile platform with respect to a monopile on which they are installed, wherein the platform installation tool comprises: a base frame defining an internal storage chamber, and having a landing device for engaging a top side of the monopile, wherein the base frame is dimensioned for holding the external monopile platform at the outside thereof and for holding the internal monopile platform inside the internal storage chamber, a rotating frame that is connected to the base frame via a rotation bearing and a rotation drive for rotating the rotating frame with respect to the base frame, and a hoisting device on the rotating frame comprising an external monopile platform hoist and an internal monopile platform hoist for hoisting in suspension respectively the external monopile platform and the internal monopile platform.

## Description

### BACKGROUND

The invention relates to a platform installation tool for handling an internal monopile platform and an external monopile platform with respect to a monopile on which they are installed. The invention further relates to a method for installing an internal monopile platform at the inside of a monopile and an external monopile platform at the outside of the monopile using the platform installation tool.

A monopile is known in the prior art. For example, a conventional monopile is used for building a foundation for supporting an offshore wind turbine. The monopile is inserted in a subsoil, for example a seabed, and at a later stage the wind turbine is installed thereon.

In order to perform maintenance to the wind turbine and the monopile is it essential that workmen have access thereto and have working space at site. To provide this access and working space, secondary steel is provided to the monopile after insertion of the monopile in the seabed. Examples of secondary steel are a boat landing, which is installed outside the monopile, and an internal monopile platform, which is installed inside the monopile near the top portion thereof.

It is known to transport and install secondary steel towards and onto a monopile by means of an installation tool. Two secondary steel items are transported towards the monopile by means of the installation tool, and thereafter the secondary steel items are transferred from the installation tool onto the monopile.

As an example thereof, EP 3 260 604 discloses an installation tool for installation of an external work platform on a monopile.

### SUMMARY OF THE INVENTION

A disadvantage of the known platform installation tool is that alignment of the installation tool onto the monopile is critical. The installation tool should be placed onto the monopile with narrow tolerances regarding the rotational orientation of the installation tool with respect to the centerline of the monopile requiring a precise lifting operation by a crane. As a result the lifting operation requires multiple attempts or is time consuming, making the installation process inefficient.

It is an object of the present invention to provide a platform installation tool that overcomes at least in part the disadvantage of the conventional platform installation tool.

According to a first aspect, the invention relates to Platform installation tool for handling an internal monopile platform and an external monopile platform with respect to a monopile on which they are installed, wherein the platform installation tool comprises a base frame having a longitudinal direction, defining an internal storage chamber having a centerline parallel to the longitudinal direction, and having a landing device for engaging a top side of the monopile, wherein the base frame is dimensioned for holding the external monopile platform at the outside thereof and for holding the internal monopile platform inside the internal storage chamber, a rotating frame that is connected to the base frame via a rotation bearing to rotate the rotating frame with respect to the base frame around the centerline, a rotation drive between the base frame and the rotating frame for rotating the rotating frame with respect to the base frame around the centerline, and a hoisting device on the rotating frame comprising an external monopile platform hoist and an internal monopile platform hoist for hoisting in suspension respectively the external monopile platform and the internal monopile platform with respect to the base frame in a direction parallel to the centerline, wherein the external monopile platform is hoisted along the outside of the base frame, and wherein the internal monopile platform is hoisted through the internal storage chamber.

The platform installation tool holds the external monopile platform and the internal monopile platform and can land therewith onto the monopile. After landing, the rotating frame is rotated with respect to the base frame by the rotation drive around the centerline. As the external monopile platform and the internal monopile platform are suspended from the rotating frame respectively by the external monopile platform hoist and the internal monopile platform hoist, both platforms are rotated simultaneously with respect to the base frame around the centerline. This co-rotation of the external monopile platform and the internal monopile platform allows for rotational alignment of the platforms with respect to the monopile after the platform installation tool has landed thereon. As a result, landing the platform installation tool onto the monopile can be performed with wide tolerances regarding the rotational orientation.

In an embodiment the platform installation tool comprises a hoist attachment on the rotating frame that can be engaged by an external crane for hoisting and transporting the platform installation tool.

In an embodiment thereof the hoist attachment is moveable with respect to the rotating frame in a direction perpendicular to the centerline. The external monopile platform has a center of gravity that is not at the centerline of the internal storage chamber when the external monopile platform is connected to the platform installation tool. In order to avoid imbalance of the assembly of both the platform installation tool and the external monopile platform when the external monopile platform is connected to the platform installation tool, the hoist attachment of the platform installation tool is moved in order to position the hoist attachment above the center of gravity of the loaded platform installation tool. The translation of the hoist attachment of the platform installation tool compensates for the weight of the external monopile platform.

In an embodiment the platform installation tool comprises an external monopile platform guiding device having an external monopile platform guide frame for connecting to the external monopile platform, wherein the external monopile platform guiding device is hoisted in suspension by the external monopile platform hoist in a direction parallel to the centerline, wherein the external monopile platform guiding device guides the external monopile platform along the base frame and along the monopile both during hoisting the external monopile platform guiding device and during rotating the rotating frame with respect to the base frame around the centerline. In an embodiment thereof the external monopile platform guiding device comprises an external monopile platform connector at the external monopile platform guide frame for connecting with the external monopile platform. In a further embodiment thereof the external monopile platform connector comprises a connecting pin for receiving a tensioning sling thereto, which tensioning sling is connected with the external monopile platform, wherein the tensioning sling connects the external monopile platform and the external monopile platform guiding device to each other. In a further embodiment thereof the connecting pin is retractable, so that the tensioning sling and the connecting pin are disconnected from each other when the connecting pin is retracted. In a further embodiment thereof the connecting pin is a hydraulic driven connecting pin.

In an embodiment the external monopile platform guiding device comprises multiple pushing cylinders at the external monopile platform guide frame for positioning the external monopile platform with respect to the external monopile platform guide frame when the external monopile platform guiding device and the external monopile platform are connected to each other. In an embodiment thereof the pushing cylinders extend parallel to the centerline, and wherein the pushing cylinders push against a top surface of the external monopile platform. In particular when the external monopile platform and the external monopile platform guiding device are connected to each other via the tensioning sling, the pushing cylinders push against a tensioning force of the tensioning sling while the tensioning sling is under tension.

In an embodiment the external monopile platform guiding device is provided outside the base frame when seen in a direction parallel to the centerline.

In an embodiment the external monopile platform guide frame is substantially ring-shaped and arranged around the base frame when seen in a direction parallel to the centerline.

In an embodiment the external monopile platform guiding device comprises an external monopile platform guide rotating wheel at the external monopile platform guide frame, wherein the external monopile platform guide rotating wheel has a rotation axis parallel to the centerline, and a wheel drive for driving the external monopile platform guide rotating wheel to rotate around its rotation axis, wherein the external monopile platform guide rotating wheel is positioned for rolling over the outer circumference of the base frame in order to rotate the external monopile platform guiding device with respect to the base frame around the centerline. In an embodiment thereof the external monopile platform guiding device comprises a wheel actuator for moving the external monopile platform guide rotating wheel with respect to the external monopile platform guide frame in a direction transverse to the centerline. The external monopile platform guide rotating wheel is driven in rotation simultaneously with the rotation drive that rotates the rotating frame with respect to the base frame around the centerline. The rotation of the external monopile platform guide rotating wheel allows for rotation of the external monopile platform guide frame with respect to the base frame around the centerline. The rotation the lower external monopile platform guide frame guides the external monopile platform to rotate with respect to the base frame around the centerline during rotation of the rotating frame with respect to the base frame around the centerline.

In an embodiment the platform installation tool comprises an internal monopile platform guiding device with an internal monopile platform guide frame, wherein the internal monopile platform guide frame is suspended from the rotating frame by the internal monopile platform hoist and wherein the internal monopile platform guiding device is configured for connecting to the internal monopile platform, wherein the internal monopile platform guiding device guides the internal monopile platform during hoisting and rotation thereof with respect to the base frame parallel to and around the centerline, respectively. In an embodiment thereof the internal monopile platform guiding device is provided inside the base frame when seen in a direction parallel to the centerline.

In an embodiment the landing device comprises a bumper for centering the platform installation tool with respect to the monopile during landing the platform installation tool onto the top side of the monopile. In an embodiment thereof the landing device comprises a ring-shaped landing surface at the base frame.

In an embodiment the base frame is substantially cylindrical. In an embodiment the base frame comprises a base frame wall and a top end at the rotation bearing and opposite the landing device, wherein the base frame wall extends between the landing device and the top end of the base frame. In an embodiment thereof the base frame has a base frame outer diameter that matches the outer diameter of the monopile.

In an embodiment operation of the platform installation tool is controlled remotely. During installation of the internal monopile platform and the external monopile platform from the platform installation tool onto the monopile, no workmen are needed on the platform installation tool. This allows for a safe installation process.

According to a second aspect, the invention provides a method for installing an internal monopile platform at the inside of a monopile and an external monopile platform at the outside of the monopile using the platform installation tool according to the first aspect, wherein the method comprises the following steps:
landing the platform installation tool that is loaded with the external monopile platform and the internal monopile platform onto a top side of the monopile;
lowering the internal monopile platform through the monopile by the internal monopile platform hoist to install the internal monopile platform inside the monopile, and lowering the external monopile platform along the monopile by the external monopile platform hoist to install the external monopile platform around the monopile;
rotating the rotating frame with respect to the base frame around the centerline by the rotation drive to align the external monopile platform with the monopile;
rotating the rotating frame with respect to the base frame around the centerline by the rotation drive to align the internal monopile platform with the monopile;
wherein the internal monopile platform co-rotates with the external monopile platform before the external monopile platform is installed at the outside of the monopile, or wherein the external monopile platform co-rotates with the internal monopile platform before the internal monopile platform is installed at the inside of the monopile.

In an embodiment thereof the installation of the external monopile platform at the outside of the monopile is prior to the installation of the internal monopile platform at the inside of the monopile.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a schematic overview of an assembly of a crane vessel with a crane, a monopile, and a platform installation tool according to an embodiment of the invention that is suspended from the crane and that holds an external monopile platform and an internal monopile platform for the monopile;
Figures 2A-F are schematic overviews of subsequent steps during transport and installation of the internal monopile platform and the external monopile platform towards and onto the monopile using the platform installation tool of figure 1;
Figures 3A-E are an isometric top view, an isometric bottom view, a front view, a front view cross section, and an isometric front view cross section of the platform installation tool of figure 1 without the external monopile platform and the internal monopile platform;
Figures 4A-E are an isometric top view, an isometric bottom view, a front view, a front view cross section, and an isometric front view cross section of the platform installation tool of figure 1 with the external monopile platform and the internal monopile platform;
Figure 5 is an isometric view of the external monopile platform of figure 1;
Figure 6 is an isometric view of the internal monopile platform of figure 1; and
Figure 7 is an isometric top view of an external monopile platform guiding device of the platform installation tool of Figures 2A-F.

### DETAILED DESCRIPTION OF THE INVENTION

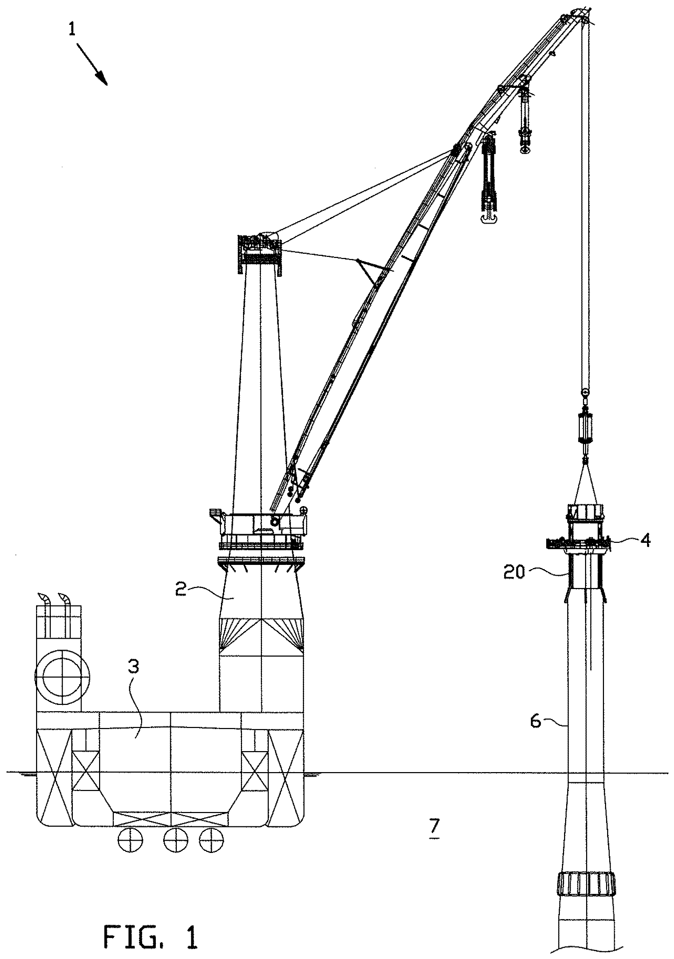

Figure 1 shows an assembly 1 of a crane vessel 3 with a crane 2, and a platform installation tool 20 that is suspended from the crane 2. The platform installation tool 20 holds an external monopile platform 4 and an internal monopile platform 5 thereat that are to be installed onto a monopile 6 that is inserted into a seabed of a sea 7. The assembly 1 is configured for transporting the platform installation tool 20 including the external monopile platform 4 and the internal monopile platform 5 from a supply vessel towards the monopile 6.

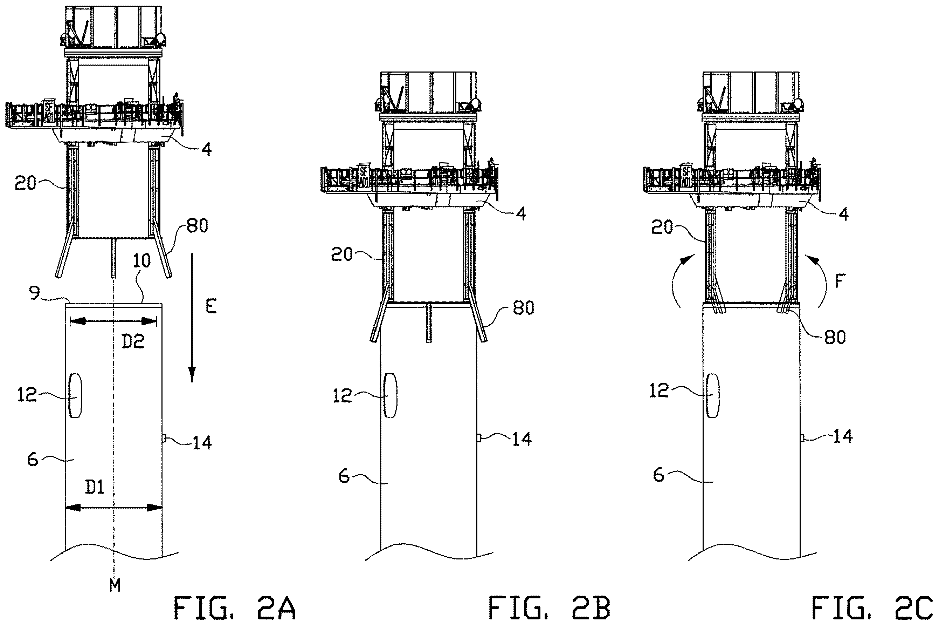

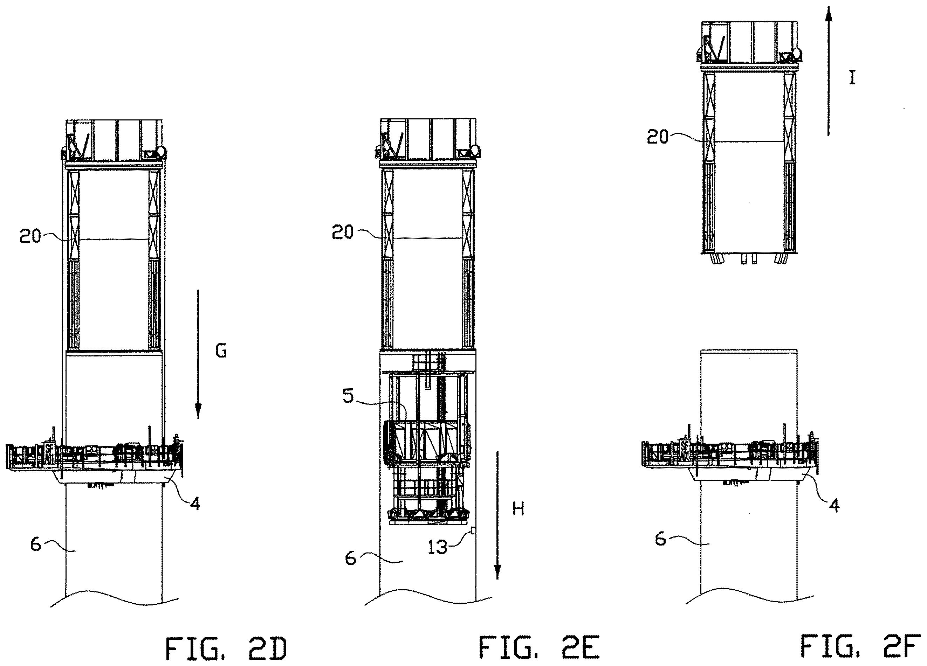

As best shown in figures 2A and 2E, the monopile 6 has at its top side an open top end 10 and comprises an inwardly directed top flange 9 for receiving the platform installation tool 20 thereto. The monopile 6 has a monopile centerline M, a monopile outer diameter D1 and a smaller monopile inner diameter D2 as defined by the top flange 9. Further, the monopile 6 comprises at the inside thereof an inwardly projecting support 13 for receiving and supporting the internal monopile platform 5 thereto, and at the outside thereof an outwardly projecting support 14 for receiving and supporting the external monopile platform 4 thereto. The monopile 6 comprises a door 12 that provides access from the external monopile platform 4 to the internal monopile platform 5 and vice versa, once the external monopile platform 4 and the internal monopile platform 5 are installed onto the monopile 6.

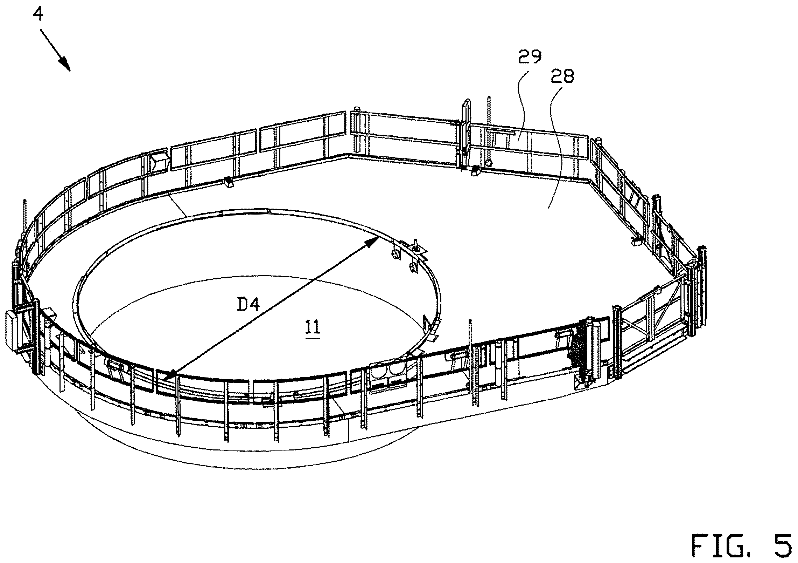

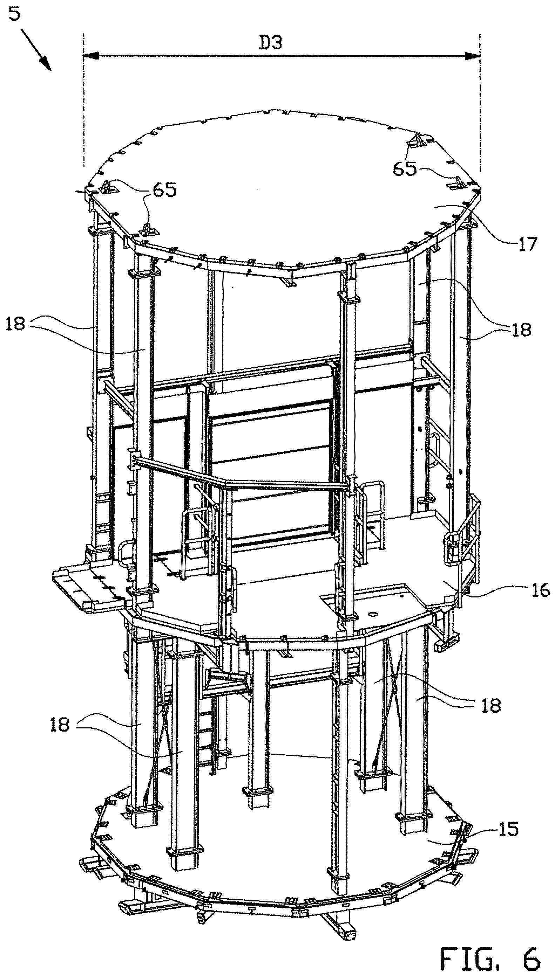

As shown in figures 2E and 6, the internal monopile platform 5 is dimensioned and configured to be installed inside the monopile 6. In this example the internal monopile platform 5 is substantially cylindrically shaped and has an internal monopile platform outer diameter D3 that is slightly smaller than the monopile inner diameter D2, so that the internal monopile platform 5 fits inside the monopile 6. The internal monopile platform 5 has a bottom platform 15, a middle platform 16 and a top platform 17 for providing working space, and that are connected to each other by means of a plurality of vertically arranged internal monopile platform beams 18. As shown in figures 2D and 5, the external monopile platform 4 is dimensioned and configured to be installed outside and around the monopile 6. The external monopile platform 4, which is made of concrete, has an off-centered external monopile platform opening 11 therein having an external monopile platform opening diameter D4 that is slightly larger than the monopile outer diameter D1. The external monopile platform 4 comprises an asymmetrical working platform 28 with a safety barrier 29 therearound for providing working space.

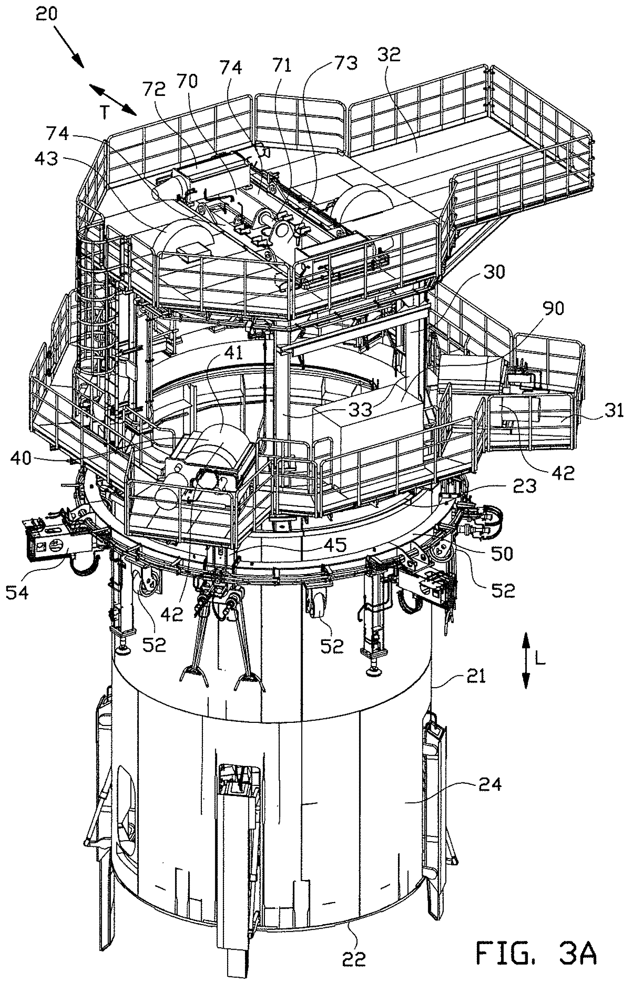

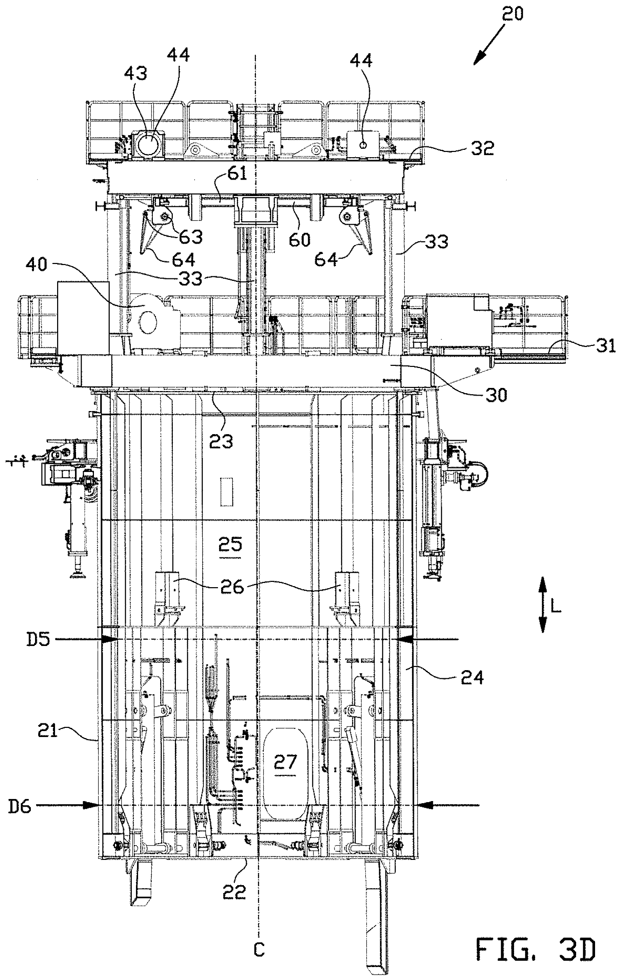

As best shown in figures 3A and 3D, the platform installation tool 20 comprises a substantially cylindrical base frame 21 having a base frame wall 24 that extends in a vertical longitudinal direction L between an open bottom end 22 and an open top end 23, and that defines an internal storage chamber 25 therein. The internal storage chamber 25 has an internal storage chamber diameter D5 which is larger than the internal monopile platform outer diameter D3, and is dimensioned so that the internal monopile platform 5 fits therein. The internal storage chamber 25 has a centerline C that extends parallel to the longitudinal direction L of the base frame 21 and that coincides with the monopile centerline M when the platform installation tool 20 is positioned onto the monopile 6. The platform installation tool 20 has a side opening 27 in the base frame wall 24 for providing access to the internal monopile platform 5, when the internal monopile platform 5 is hold inside the internal storage chamber 25.

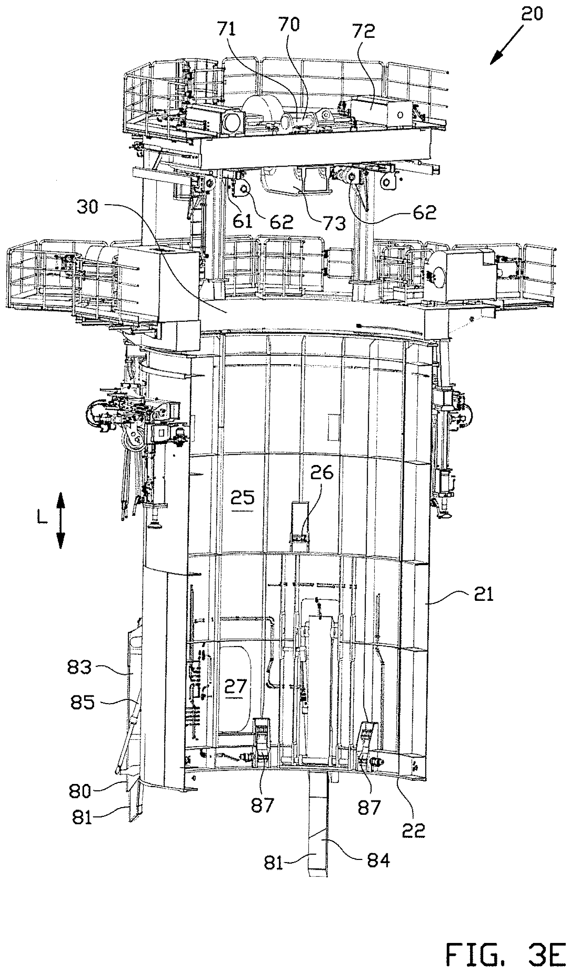

As best shown in figures 3D and 3E, the base frame 21 comprises multiple retractable internal monopile platform supports 26 at the inside of the base frame wall 24 facing the internal storage chamber 25. The internal monopile platform supports 26 are moveable between a support position, in which the internal monopile platform supports 26 extend into the internal storage chamber 25 to receive the internal monopile platform 5 thereon, and a retracted position to allow the internal monopile platform 5 to enter or exit the base frame 21. The base frame wall 24 defines a base frame outer diameter D6 of the base frame 21 that matches the monopile outer diameter D1, and that is smaller than the external monopile platform opening diameter D4 so that the external monopile platform 4 fits around the base frame wall 24. The base frame outer diameter D6 matching the monopile outer diameter D1 means that the base frame outer diameter D6 is dimensioned similar to or substantially similar to the monopile outer diameter D1.

The platform installation tool 20 comprises a rotating frame 30 that is arranged at the top end 23 of the base frame 21. The rotation frame 30 comprises a first platform 31 at a first level at the top end 23 of the base frame 21, and a second platform 32 at a second level above the first level. The first platform 31 and the second platform 32 are spaced from each other by beams 33 that extend parallel to the centerline C.

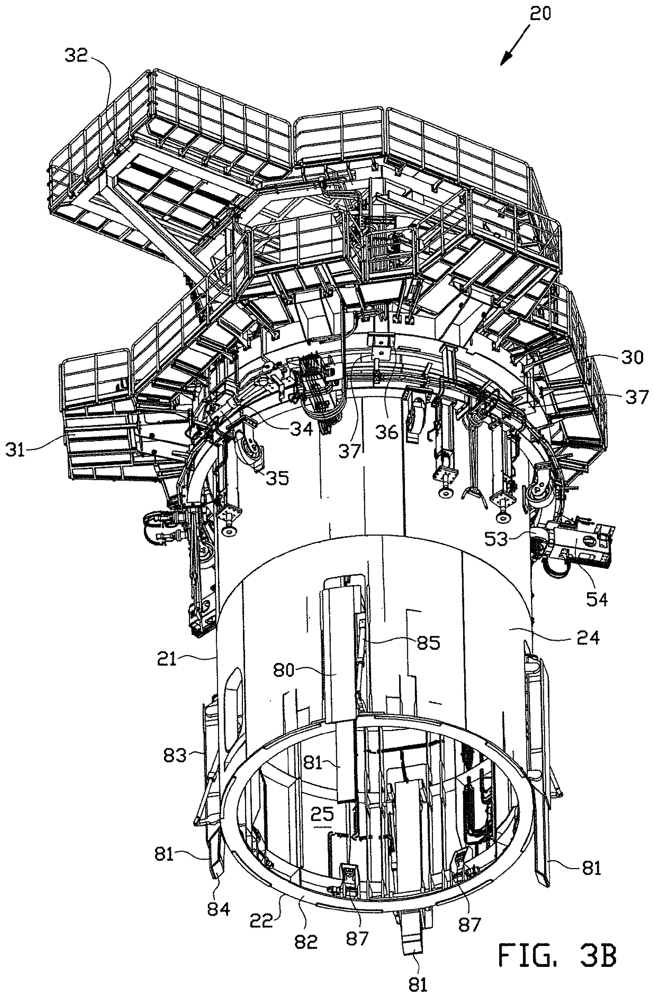

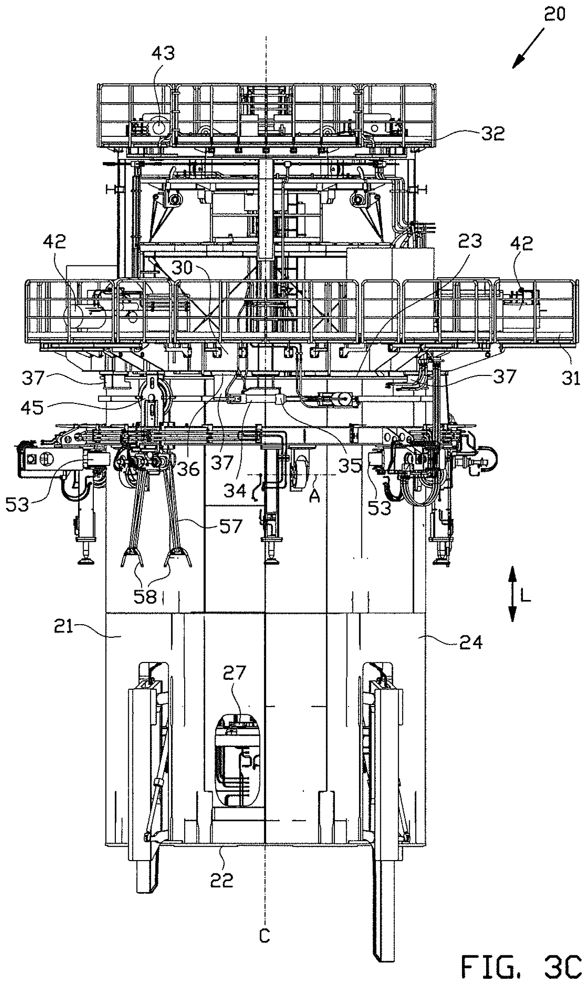

As best shown in figures 3B and 3C, the rotating frame 30 and the base frame 21 are rotatably connected to each other via a rotation bearing 36 that allows the rotating frame 30 to rotate with respect to the base frame 21 around the centerline C. The platform installation tool 20 comprises a rotation drive 34 between the base frame 21 and the rotating frame 30 for driving the rotation of the rotating frame 30. In this example the rotation bearing 36 comprises multiple sliders 37, and the rotation drive 34 comprises multiple actuators 35, so that the rotating frame 30 slides with respect to the base frame 21 around the centerline C when the actuators 35 are expanded or retracted.

As best shown in figures 3A and 3D, the platform installation tool 20 comprises on the rotating frame 30 a hoisting device 40 for hoisting the external monopile platform 4 and the internal monopile platform 5 in suspension with respect to the base frame 21 in a direction parallel to the longitudinal direction L of the base frame 21. It is to be understood that in the context of the platform installation tool the term hoisting includes both moving in an upwards direction, and moving in a downwards direction. The hoisting device 40 comprises an external monopile platform hoist 41 having multiple external monopile platform winches 42 that each wind up or wind out a non-shown external monopile platform hoisting cable to hoist the external monopile platform 4 along the outside of the base frame 21 when seen in a direction parallel to the centerline C, and an internal monopile platform hoist 43 having multiple internal monopile platform winches 44 that each wind up or wind out a non-shown internal monopile platform hoisting cable to hoist the internal monopile platform 5 through the internal storage chamber 25 when seen in a direction parallel to the centerline C. The external monopile platform hoist 41 and the internal monopile platform hoist 43 are able to hoist the external monopile platform 4 and the internal monopile platform 5 independently from each other. The external monopile platform winches 42 are provided on the first platform 31 of the rotating frame 30 at a portion thereof that is located outside the base frame wall 24 when seen in a direction parallel to the centerline C. The internal monopile platform winches 44 are provided on the second platform 32 of the rotation frame 30 at a portion thereof that is located within the internal storage chamber 25 when seen in a direction parallel to the centerline C.

The platform installation tool 20 comprises an external monopile platform guiding device 50 for connecting with the external monopile platform 4 and for guiding the external monopile platform 4 during movement thereof with respect to the base frame 21. The external monopile platform guiding device 50 is suspended from the first platform 31 of the rotating frame 30 via the external monopile platform hoisting cables that are connected to the external monopile platform winches 42 of the external monopile platform hoist 41.

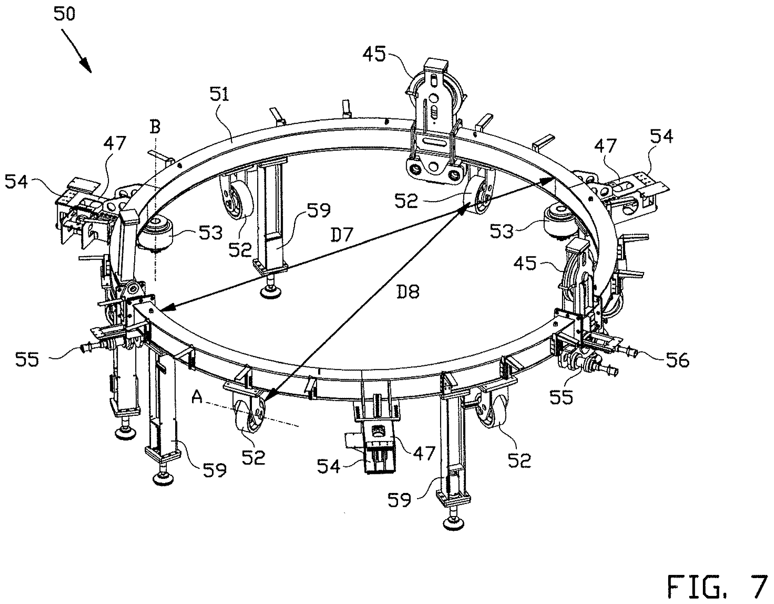

As best shown in figures 3A and 7, the external monopile platform guiding device 50 comprises a substantially ring-shaped external monopile platform guide frame 51 that is provided around the base frame 21 when seen in a direction parallel to the longitudinal direction L of the base frame 21. The external monopile platform guide frame 51 has an inner diameter D7 that is larger than the base frame outer diameter D6. The external monopile platform guide frame 51 is provided with multiple external monopile platform hoisting pulleys 45 through which the external monopile platform hoisting cables are reeved.

The external monopile platform guiding device 50 comprises in this example six external monopile platform guide centering wheels 52 arranged at the external monopile platform guide frame 51 for centering the external monopile platform guide frame 51 with respect to the base frame wall 24. Each external monopile platform guide centering wheel 52 has a rotation axis A transverse to the centerline C, and is able to rotate freely therearound. The external monopile platform guide centering wheels 52 are evenly distributed along the external monopile platform guide frame 51 and define a guiding inner diameter D8 of the external monopile platform guiding device 50, which guiding inner diameter D8 is smaller than the inner diameter D7 of the external monopile platform guide frame 50, and slightly larger than the base frame outer diameter D6.

The external monopile platform guiding device 50 further comprises multiple external monopile platform guide rotating wheels 53 for driving a rotation of the external monopile platform guiding device 50 around the centerline C. Each external monopile platform guide rotating wheels 53 is arranged at a wheel actuator 54, which wheel actuator 54 is arranged at the external monopile platform guide frame 51. The external monopile platform guide rotating wheels 53 are evenly distributed along the external monopile platform guide frame 51 and each has a rotation axis B parallel to the centerline C. The wheel actuators 54 move the external monopile platform guide rotating wheels 53 with respect to the external monopile platform guide frame 51 in a direction transverse to the centerline C. The external monopile platform guide rotating wheels 53 are driven in rotation by means of a rotation wheel drive 47 provided at the external monopile platform guide frame 51. Further, the external monopile platform guide rotating wheels 53 define a rotation inner diameter D9 of the external monopile platform guiding device 50, which rotation inner diameter D9 is adjustable as the wheel actuators 54 move the external monopile platform guide rotating wheels 53 towards and away from the external monopile platform guide frame 51. The rotation wheel drive 47 and the rotation drive 34 are activated simultaneously in order to rotate the rotation frame 30 with respect to the base frame 21 around the centerline C.

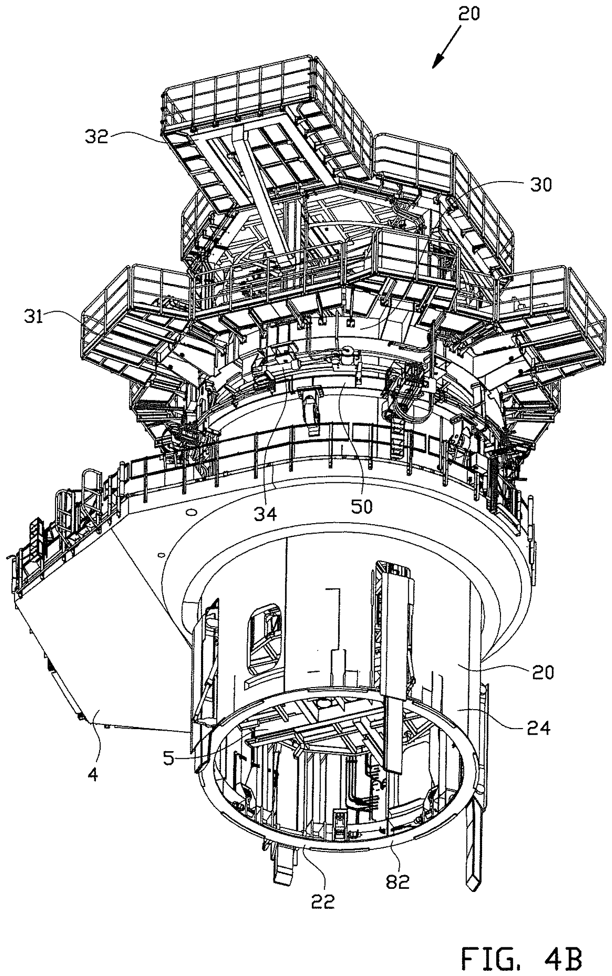

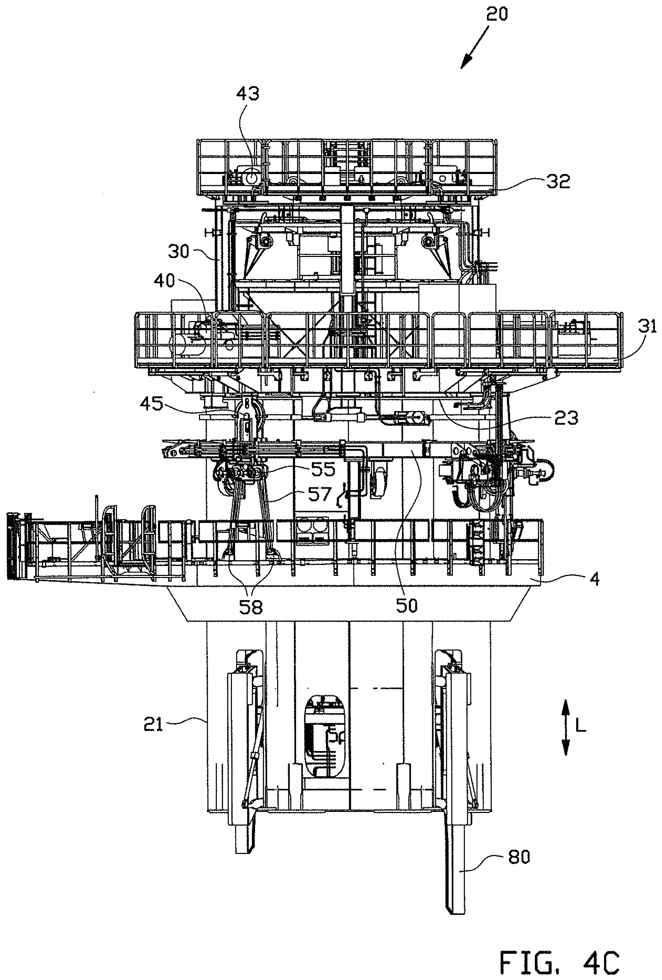

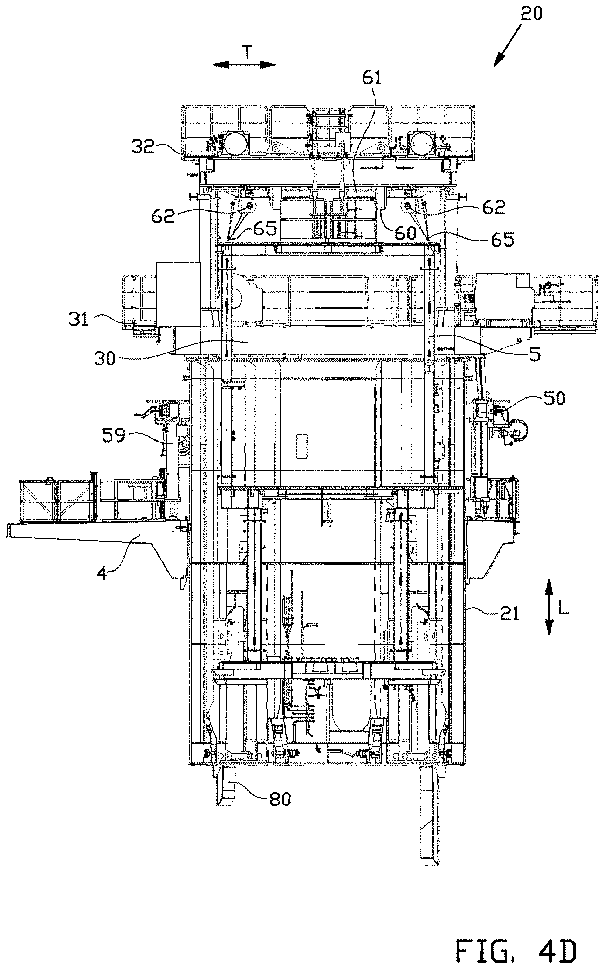

As best shown in figures 4C and 7, the external monopile platform guiding device 50 comprises external monopile platform connectors 55 arranged at the external monopile platform guide frame 51 for connecting the external monopile platform 4 and the external monopile platform guide frame 51 to each other, so that the external monopile platform 4 is hoisted by the hoisting device 40 while being guided by the external monopile platform guiding device 50. Each external monopile platform connector 55 comprises a connecting pin 56, in this example two hydraulic driven connecting pins 56, for receiving a tensioning sling 57 thereto. The tensioning sling 57 is connected to the external monopile platform 4 via a sling eye 58 on the external monopile platform 4 near the external monopile platform opening 11. The connecting pins 56 are moveable between an extracted position and a retracted position, so that the tensioning sling 57 is disconnected from the external monopile platform connector 55 when the connecting pins 56 are retracted into the retracted position. Further, the connecting pins 56 are configured for tensioning the tensioning slings 57 between the external monopile platform connector 55 and the external monopile platform 4. In figures 3A-3E, the tensioning slings 57 and sling eyes 58 are shown for illustration purposes only.

The external monopile platform guiding device 50 comprises a pushing cylinder 59, in this example five pushing cylinders 59, that are connected to the external monopile platform guide frame 51. Each pushing cylinder 59 extends downwards from the external monopile platform guide frame 51 parallel to the centerline C. The pushing cylinders 59 position the external monopile platform 4 with respect to the external monopile platform guide frame 51 when the external monopile platform guiding device 50 and the external monopile platform 4 are connected to each other via the external monopile platform connectors 55 by pushing against the top surface of the external monopile platform 4. The pushing cylinders 59 are configured to stabilize the external monopile platform 4 when the external monopile platform is suspended from the rotating frame 30 by the hoisting device 40. The pushing cylinders 59 are controlled independently from each other and deliver different degrees of pushing, depending on where the external monopile platform requires additional support to remain stable.

As best shown in figure 3D, the platform installation tool 20 comprises an internal monopile platform guiding device 60 that is configured for connecting with the internal monopile platform 5 and for guiding the internal monopile platform 5 during movement thereof with respect to the base frame 21. The internal monopile platform guiding device 60 is suspended from the second platform 32 of the rotating frame 30 via the internal monopile platform hoisting cables that are connected to the internal monopile platform winches 44 of the internal monopile platform hoist 43.

The internal monopile platform guiding device 60 comprises a rectangular-shaped internal monopile platform guide frame 61 that is provided inside the base frame 21 when seen in a direction parallel to the longitudinal direction L of the base frame 21. The internal monopile platform guide frame 61 is provided with multiple non-shown internal monopile platform hoisting pulleys through which the internal monopile platform hoisting cables are reeved.

The internal monopile platform guiding device 60 further comprises internal monopile platform connectors 62 arranged at the internal monopile platform guide frame 61 for connecting the internal monopile platform 5 and the internal monopile platform guide frame 61 to each other, so that the internal monopile platform 5 is hoisted by the hoisting device 40 while being guided by the internal monopile platform guiding device 60. Each internal monopile platform connector 62 comprises a connecting pin 63, in this example two hydraulic driven connecting pins 63, for receiving a tensioning sling 64 thereto. The tensioning sling 64 is connected to the internal monopile platform 5 via a sling eye 65 on the internal monopile platform 5 at or near the top side thereof. The connecting pins 63 are moveable between an extracted position and a retracted position, so that the tensioning sling 64 is disconnected from the internal monopile platform connector 62 when the connecting pins 63 are retracted into the retracted position. Further, the connecting pins 63 are configured for tensioning the tensioning slings 64 between the internal monopile platform connector 62 and the internal monopile platform 5.

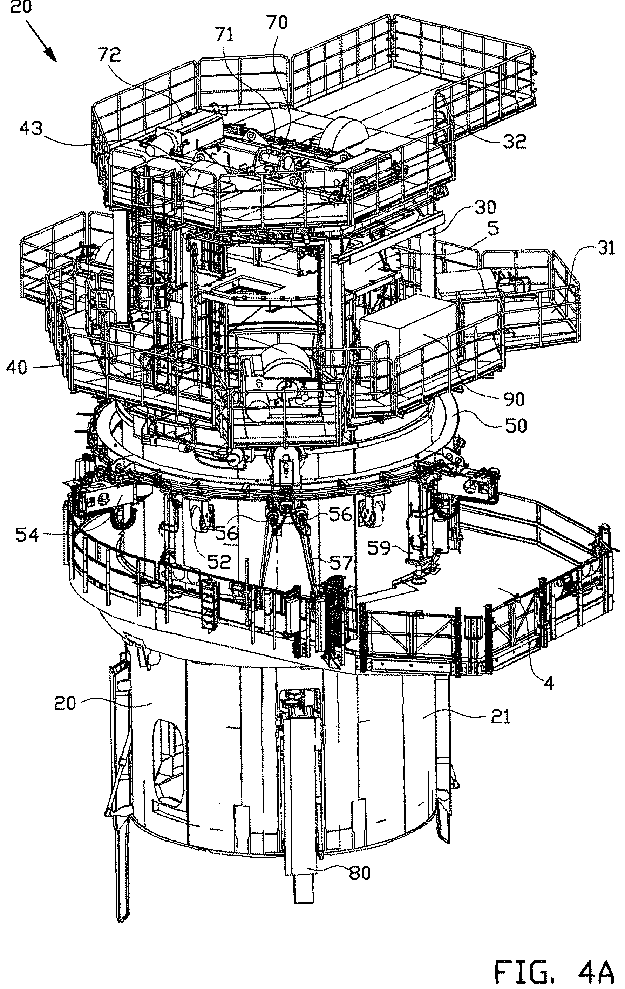

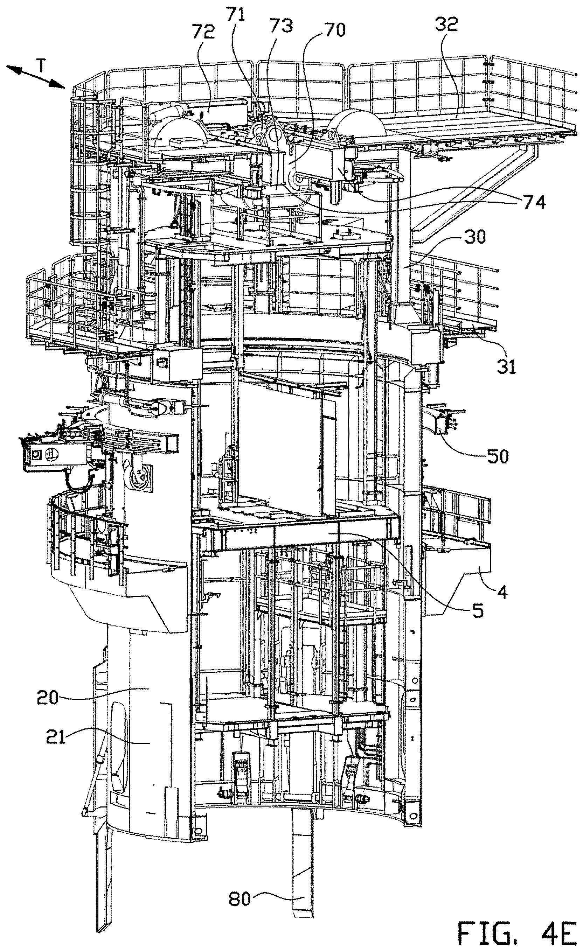

As best shown in figures 3A, 4A and 4E, the platform installation tool 20 comprises at the rotating frame 30, in particular at the second platform 32 thereof, a center of gravity compensating device 70 for compensating the center of gravity of the platform installation tool 20 in dependence of whether the external monopile platform 4 is suspended from the platform installation tool 20. The center of gravity compensating device 70 comprises a moveable hoist attachment 71 on a trolley 73 that is slideably connected to slide beams 74 on the second platform 32 of the rotating frame 30, and a drive 72 for translating the hoist attachment 71 on the trolley 73 in a translation direction T transverse to the centerline C along the slide beams 74. The hoist attachment 71 is engageable by the crane 2 in order to hoist and transport the platform installation tool 20.

As best shown in figures 3B and 3E, the platform installation tool 20 comprises at the bottom end 22 of the base frame 21 a landing device 80 with a landing surface 82 for landing onto the top flange 9 of the monopile 6. The landing surface 82 is the bottom side of base frame wall 24 at the bottom end 22. The landing device 80 further comprises multiple bumpers 81 for centering the platform installation tool 20 with respect to the top flange 9.

The bumpers 81 are connected to the base frame 21 near the bottom end 22 thereof, and are evenly distributed along the circumference of the base frame wall 24. Each bumper 81 comprises a main bumper portion 83, an extension bumper portion 84 that is extendable from the main bumper portion 83 in a direction parallel to the centerline C, a first bumper actuator 85 that is provided between the base frame wall 24 and the main bumper portion 83 for moving the main bumper portion 83 with respect to the base frame wall 24, and a non-shown second bumper actuator that is provided between the main bumper portion 83 and the extension bumper portion 84 for moving the extension bumper portion 84 with respect to the main bumper portion 83 in a direction parallel to the centerline C. Each bumper 81 is moveable between an embedded position, an unfolded position and an extended position, and is controlled individually to move between the embedded position, the unfolded position, the extended position, and any position therebetween.

When the bumper 81 is in the embedded position, the extension bumper portion 84 is retracted inside the main bumper portion 83, and the main bumper portion 83 is embedded inside the base frame wall 24. In the embedded position, the first bumper actuator 85 and the second bumper actuator are retracted.

When the bumper 81 is in the unfolded position, the extension bumper portion 84 is retracted inside the main bumper portion 83, and the main bumper portion 83 is positioned outside the base frame wall 24, at the side thereof opposite the internal storage chamber 25. In the unfolded position, the first bumper actuator 85 is extracted and the second bumper actuator is retracted.

When the bumper 81 is in the extended position, the extension bumper portion 84 is extracted outside the main bumper portion 83, and the main bumper portion 83 positioned outside the base frame wall 24, similar to the unfolded position. In the extended position, the first bumper actuator 85 and the second bumper actuator are extracted.

The landing device further comprises multiple engagement clamps 87 for engaging the top flange 9 of the monopile 6 after the platform installation tool 20 has landed thereon. The engagement clamps 87 are arranged at the bottom end 22 of the base frame 21, and are moveable between a clamping position, in which the engagement clamps 87 clamp the top flange 9 of the monopile 6, and an embedded position, in which the engagement clamps 87 are embedded in the base frame wall 24 of the base frame 21.

The platform installation tool 20 comprises a controller 90 that is controlled remotely. The controller 90 controls the internal monopile platform supports 26, the rotation drive 34, the external monopile platform hoist 41, the internal monopile platform hoist 43, the rotation wheel drive 47, the wheel actuators 54, the hydraulic driven connecting pins 56, 63, the pushing cylinders 59, the mass drive 72, the first bumper actuators 85 and the second bumper actuators 86. The platform installation tool 20 further comprises several non-shown cameras that are in communication with the controller 90. The cameras record the mutual positions of the components of the platform installation tool 20, the external monopile platform 4, the internal monopile platform 5 and the monopile 6. The controller 90 and the cameras allow for remote installation of the external monopile platform 4 and the internal monopile platform 5 from the platform installation tool 20 onto the monopile 6.

The platform installation tool 20 is used for transporting the external monopile platform 4 and the internal monopile platform 5 towards the monopile 6, and for installing the external monopile platform 4 and the internal monopile platform 5 from the platform installation tool 20 onto the monopile 6.

The first step is to load the external monopile platform 4 and the internal monopile platform 5 onto the platform installation tool 20. Loading the platform installation tool 20 is performed at quayside using a loading tower. The loading tower is a device that is substantially similar to the top part of the monopile 6. The loading tower comprises at the top thereof a landing platform that is shaped as the top flange 9 of the monopile 6, and onto which the platform installation tool 20 lands. The loading tower is loaded with the external monopile platform 4 and the internal monopile platform 5 that are to be loaded onto the platform installation tool 20 by means of a quayside crane. The external monopile platform 4 and the internal monopile platform 5 are arranged, respectively, around and inside the loading tower, which is similar to when they are positioned onto the platform installation tool 20.

The empty platform installation tool 20 is transported towards the loaded loading tower by a crane, and lands with its landing device 80 onto the top of the loading tower. During landing the bumpers 81 are in their extended position to center the platform installation tool 20 onto the loading tower.

Subsequently, the internal monopile platform 5 is loaded from the loading tower onto the platform installation tool 20. The internal monopile platform guiding device 60 is lowered by the internal monopile platform hoist 43 towards the internal monopile platform 5 in the loading tower. Thereafter, the internal monopile platform 5 is connected to the internal monopile platform connectors 62 via the tensioning slings 64. After connecting the internal monopile platform 5 and the internal monopile platform guiding device 60 to each other, the internal monopile platform guiding device 60 and the internal monopile platform 5 are hoisted through the bottom end 22 into the internal storage chamber 25. When the internal monopile platform 5 is hoisted to a position above the internal monopile platform support 26, the internal monopile platform supports 26 are moved from their retracted position into their support position. Then, the internal monopile platform 5 is lowered by the internal monopile platform hoist 43 and lands onto the internal monopile platform supports 26. The internal monopile platform 5 and the internal monopile platform guiding device 60 remain connected.

Subsequently, the external monopile platform 4 is loaded from the loading tower onto the platform installation tool 20. While loading the external monopile platform 4, the bumpers 81 are in the embedded position. The external monopile platform guiding device 50 is lowered by the external monopile platform hoist 41 towards the external monopile platform 4. Thereafter, the external monopile platform 4 is connected to the external monopile platform connectors 55 via the tensioning slings 57, which tensioning slings 57 are tensioned using the hydraulic driven connecting pins 56. Further, the pushing cylinders 59 push the top surface of the external monopile platform 4 to position the external monopile platform 4 and the external monopile platform guiding device 50 with respect to each other. When the external monopile platform 4 is connected to the platform installation tool 20, the hoist attachment 71 of the center of gravity compensating device 70 is shifted by the drive 72 along the translation direction T away from the centerline C. The hoist attachment 71 is shifted to keep the platform installation 20 in the same upright orientation while the center of mass of the platform installation tool 20 is shifted as the external monopile platform 4 is connected thereto. Then, the external monopile platform hoist 41 hoists the external monopile platform guiding device 50 and thereby the external monopile platform 4 upwards beyond the bottom end 22 and along the base frame wall 24. The external monopile platform guide centering wheels 52 ensure that the external monopile platform 4 remains centered with respect to the centerline C, and they prevent collision of the external monopile platform 4 and the base frame wall 24. The external monopile platform 4 and the external monopile platform guiding device 50 remain connected.

Alternatively, the external monopile platform 4 is loaded from the loading tower onto the platform installation tool 20 prior to loading the internal monopile platform 5 from the loading tower onto the platform installation tool 20.

When the external monopile platform 4 and the internal monopile platform 5 are loaded onto the platform installation tool 20 their mutual orientation relative to each other is known and fixed.

After the platform installation tool 20 is loaded with the external monopile platform 4 and the internal monopile platform 5, the platform installation tool 20 is loaded onto the supply vessel, which supply vessel transports the platform installation tool 20 towards the monopile 6. The supply vessel comprises a seafastening grillage on its deck onto which the platform installation tool 20 is fastened during transport towards the monopile 6. The seafastening grillage is a device that is substantially similar to the top part of the monopile 6, and comprises at the top thereof a landing platform that is shaped as the top flange 9 of the monopile 6, and onto which the platform installation tool 20 lands. The seafastening grillage further comprises multiple bumper guides for receiving the extension bumper portions 84 of the bumpers 81 therein, and multiple external monopile platform supports for supporting the external monopile platform thereon.

The loaded platform installation tool 20 is transported from the loading tower towards the seafastening grillage by a crane, for example the quayside crane, and lands with its landing device 80 onto the landing platform of the seafastening grillage. During landing the bumpers 81 are in their extended position to center the platform installation tool 20 onto the loading tower. Landing of the platform installation tool 20 onto the seafastening grillage is permitted in only one orientation, so that the extension bumper portions 84 fit into the bumper guides. Landing into the correct orientation is controlled by means of tugger lines. When the platform installation tool 20 has landed onto the landing platform, the engagement clamps 87 will move from the embedded position into the clamping position to engage with and clamp the landing platform to secure the platform installation tool 20 to the seafastening grillage. Subsequently, the bumpers 81 are moved from the extended position into the unfolded position, and thereafter from the unfolded position into the embedded position. Then, the external monopile platform guiding device 50, and thereby the external monopile platform 4, is lowered by the external monopile platform hoist 41 along the base frame wall 24, along and beyond the bottom end 22, and partly along the seafastening grillage until the external monopile platform 4 lands onto the external monopile platform supports on the seafastening grillage. When the external monopile platform 4 has landed onto the seafastening grillage it is secured thereto. A further advantage is that by lowering the external monopile platform 4 onto the seafastening grillage, the center of gravity of the supply vessel is lowered which is advantageously for stability. During transport by the supply vessel, the internal monopile platform 5 remains secured in the platform installation tool 20 onto the internal monopile platform supports 26.

The supply vessel may comprises a plurality of seafastening grillages and may be loaded with a plurality of platform installation tools 20 that are loaded at quayside.

When the supply vessel has arrived at the monopile 6, the external monopile platform 6 is hoisted by the external monopile platform hoist 41 around the base frame wall 24. Subsequently, the engagement clamps 87 will move from the clamping position into the embedded position, and the crane 2 engages the hoist attachment 71 and hoists the platform installation tool 20 towards and onto the monopile 6. The bumpers 81 of the landing device 80 are in the extended position, enabling that the bumpers 81 center around the top end 10 of the monopile 6. The landing surface 82 lands onto the top flange 9 in a landing direction E. This step is best illustrated in figures 2A and 2B. After landing onto the top flange 9, the engagement clamps 87 will move from the embedded position into the clamping position to engage with and clamp the top flange 9 to secure the platform installation tool 20 to the monopile 6.

Thereafter, the external monopile platform 4 and the internal monopile platform 5 are installed from the platform installation tool 20 onto the monopile 6. Installation is performed remotely. The external monopile platform 4 and the internal monopile platform 5 should be aligned to the door 12 of the monopile 6. The external monopile platform 4 and the internal monopile platform 5 can therefore only be installed in one orientation with respect to the centerline C.

Firstly, the external monopile platform 4 is installed around the monopile 6. As illustrated in figure 2C, the bumpers 81 are moved from the extended position into the unfolded position, and thereafter from the unfolded position into the embedded position (as illustrated by arrows F). Then, the external monopile platform guiding device 50, and thereby the external monopile platform 4, is lowered by the external monopile platform hoist 41 along the base frame wall 24, along and beyond the bottom end 22, and partly along the monopile 6, in an external monopile platform lowering direction G. The external monopile platform guide centering wheels 52 ensure that the external monopile platform 4 remains centered with respect to the centerline C, and they prevent collision of the external monopile platform 4 and the base frame wall 24 and/or the monopile 6.

The cameras monitor the orientation of the external monopile platform 4 with respect to the door 12 in the monopile 6. In dependence of this orientation, the rotating frame 30 and the external monopile platform guiding device 50 are simultaneously rotated around the centerline C and with respect to the base frame 21. Rotation of the rotating frame 30 is activated by the actuators 35 of the rotation drive 34, thereby sliding the rotating frame 30 through the sliders 37 of the rotation bearing 36. In the meantime, the wheel actuators 54 of the external monopile platform guiding device 50 are activated so that the external monopile platform guide rotating wheels 53 contact the monopile 6, and the rotation wheel drive 47 drives the external monopile platform guide rotating wheels 53 in rotation to roll over the outer wall of the monopile 6. This results in rotation of the external monopile platform guiding device 50 with respect to the centerline C. The simultaneous rotation of the rotating frame 30 and the external monopile platform guiding device 50 rotates the external monopile platform 4. When the external monopile platform 4 is in the required orientation with respect to the centerline C and the door 12, the external monopile platform 4 is lowered further by the external monopile platform hoist 41 and lands onto the outwardly projecting support 14 at the monopile 6. This is best shown in figure 2D.

When the external monopile platform 4 is installed onto the monopile 6, the hydraulic driven connecting pins 56 are retracted, thereby releasing the tensioning slings 57. Releasing the tensioning slings 57 disconnects the external monopile platform 4 and the external monopile platform guiding device 50. Upon disconnecting the external monopile platform 4, the hoist attachment 71 of the center of gravity compensating device 70 is shifted by the drive 72 along the translation direction T towards the centerline C. The hoist attachment 71 is shifted to keep the platform installation tool 20 in the same upright orientation while the center of mass of the platform installation tool 20 is shifted as the external monopile platform 4 is disconnected therefrom. After disconnecting the external monopile platform 4, the external monopile platform guiding device 50 is hoisted upwards by the external monopile platform hoist 41 to be arranged around the base frame wall 24.

Subsequently, the internal monopile platform 5 is installed inside the monopile 6. As illustrated in figure 2E, which is a cross-section of the monopile 6 and the platform installation tool 20, and in which the external monopile platform 4 is hidden, the internal monopile platform guiding device 60, and thereby the internal monopile platform 5, is first hoisted upwards by the internal monopile platform hoist 43. Then, the internal monopile platform supports 26 are moved from the support position into the retracted position. Thereafter, the internal monopile platform guiding device 60, and thereby the internal monopile platform 5 are lowered along the inner circumference of the base frame wall 24 through the internal storage chamber 25, along and beyond the bottom end 22, through the open end 10 of the monopile 6, and partly along the inside of the monopile 6, in an internal monopile platform lowering direction H.

As the mutual orientation of the external monopile platform 4 and the internal monopile platform 5 relative to each other is known and fixed, it is known by how many degrees the internal monopile platform 5 still needs to be rotated about the centerline C to be aligned with the door 12. The internal monopile platform 5 is rotated around the centerline C by rotating the rotating frame 30 with respect to the base frame 21. Rotation of the rotating frame 30 is activated by the actuators 35 of the rotation drive 34, thereby sliding the rotating frame 30 through the sliders 37 of the rotation bearing 36. When the internal monopile platform 5 is in the required orientation with respect to the centerline C and the door 12, the internal monopile platform 5 is lowered further by the internal monopile platform hoist 43 and lands onto the inwardly projecting support 13 inside the monopile 6.

Alternatively, the internal monopile platform 5 is rotated about the centerline C to be aligned with the door 12 prior to lowering the internal monopile platform 5 into the monopile 6.

When the internal monopile platform 5 is installed inside the monopile 6, the hydraulic driven connecting pins 63 are retracted, thereby releasing the tensioning slings 64. Releasing the tensioning slings 64 disconnects the internal monopile platform 5 and the internal monopile platform guiding device 60. After disconnecting the internal monopile platform 5, the internal monopile platform guiding device 60 is hoisted upwards by the internal monopile platform hoist 43 at least beyond the bottom end 22.

After installation of the external monopile platform 4 and the internal monopile platform 5 onto the monopile 6, the engagement clamps 87 are moved from the clamping position into the embedded position. Thereafter, the platform installation tool 20 is removed from the monopile 6 in a leaving direction I using the crane 2, as shown in figure 2F.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Platform installation tool (20) for handling an internal monopile platform (5) and an external monopile platform (4) with respect to a monopile (6) on which they are installed, wherein the platform installation tool (20) comprises:
a base frame (21) having a longitudinal direction, defining an internal storage chamber (25) having a centerline (C) parallel to the longitudinal direction, and having a landing device (80) for engaging a top side (10) of the monopile, wherein the base frame is dimensioned for holding the external monopile platform (4) at the outside thereof and for holding the internal monopile platform (5) inside the internal storage chamber,
a rotating frame (30) that is connected to the base frame (21) via a rotation bearing (36) to rotate the rotating frame with respect to the base frame around the centerline (C),
a rotation drive (34) between the base frame (21) and the rotating frame (30) for rotating the rotating frame with respect to the base frame around the centerline (C), and
a hoisting device (40) on the rotating frame (30) comprising an external monopile platform hoist (41) and an internal monopile platform hoist (43) for hoisting in suspension respectively the external monopile platform (4) and the internal monopile platform (5) with respect to the base frame (21) in a direction parallel to the centerline (C), wherein the external monopile platform is hoisted along the outside of the base frame (21), and wherein the internal monopile platform is hoisted through the internal storage chamber (25).

2. Platform installation tool (20) according to claim 1, wherein the platform installation tool comprises a hoist attachment (71) on the rotating frame (30) that can be engaged by an external crane (2) for hoisting and transporting the platform installation tool.

3. Platform installation tool (20) according to claim 2, wherein the hoist attachment (71) is moveable with respect to the rotating frame (30) in a direction perpendicular to the centerline (C).

4. Platform installation tool (20) according to any one of the preceding claims, comprising an external monopile platform guiding device (50) having an external monopile platform guide frame (51) for connecting to the external monopile platform (4), wherein the external monopile platform guiding device is hoisted in suspension by the external monopile platform hoist (41) in a direction parallel to the centerline (C), wherein the external monopile platform guiding device (50) guides the external monopile platform (4) along the base frame (21) and along the monopile (6) both during hoisting the external monopile platform guiding device (50) and during rotating the rotating frame (30) with respect to the base frame (21) around the centerline (C).

5. Platform installation tool (20) according to claim 4, wherein the external monopile platform guiding device (50) comprises an external monopile platform connector (55) at the external monopile platform guide frame (51) for connecting with the external monopile platform (4), wherein the external monopile platform connector (55) preferably comprises a connecting pin (56) for receiving a tensioning sling (57) thereto, which tensioning sling is connected with the external monopile platform (4), wherein the tensioning sling connects the external monopile platform (4) and the external monopile platform guiding device (50) to each other, wherein the connecting pin (56) is preferably retractable, so that the tensioning sling (57) and the connecting pin (56) are disconnected from each other when the connecting pin is retracted, wherein the connecting pin is preferably a hydraulic driven connecting pin.

6. Platform installation tool (20) according to claim 4 or 5, wherein the external monopile platform guiding device (50) comprises multiple pushing cylinders (59) at the external monopile platform guide frame (51) for positioning the external monopile platform (4) with respect to the external monopile platform guide frame when the external monopile platform guiding device and the external monopile platform are connected to each other, wherein the pushing cylinders (59) preferably extend parallel to the centerline (C), and wherein the pushing cylinders push against a top surface of the external monopile platform (4).

7. Platform installation tool (20) according to any one of the claims 4-6, wherein the external monopile platform guiding device (50) is provided outside the base frame (21) when seen in a direction parallel to the centerline (C).

8. Platform installation tool (20) according to any one of the claims 4-7, wherein the external monopile platform guide frame (51) is substantially ring-shaped and arranged around the base frame (21) when seen in a direction parallel to the centerline (C).

9. Platform installation tool (20) according to any one of the claims 4-8, wherein the external monopile platform guiding device (50) comprises an external monopile platform guide rotating wheel (53) at the external monopile platform guide frame (51), wherein the external monopile platform guide rotating wheel has a rotation axis parallel to the centerline (C), and a wheel drive (47) for driving the external monopile platform guide rotating wheel (53) to rotate around its rotation axis, wherein the external monopile platform guide rotating wheel (53) is positioned for rolling over the outer circumference of the base frame (21) in order to rotate the external monopile platform guiding device (50) with respect to the base frame (21) around the centerline (C), wherein the external monopile platform guiding device (50) preferably comprises a wheel actuator (54) for moving the external monopile platform guide rotating wheel (53) with respect to the external monopile platform guide frame (51) in a direction transverse to the centerline (C).

10. Platform installation tool (20) according to any one of the preceding claims, comprising an internal monopile platform guiding device (60) with an internal monopile platform guide frame (61), wherein the internal monopile platform guide frame is suspended from the rotating frame (30) by the internal monopile platform hoist (43) and wherein the internal monopile platform guiding device (60) is configured for connecting to the internal monopile platform (5), wherein the internal monopile platform guiding device (60) guides the internal monopile platform (5) during hoisting and rotation thereof with respect to the base frame (21) parallel to and around the centerline (C), respectively, wherein the internal monopile platform guiding device (60) is preferably provided inside the base frame (21) when seen in a direction parallel to the centerline (C).

11. Platform installation tool (20) according to any one of the preceding claims, wherein the landing device (80) comprises a bumper for centering the platform installation tool (20) with respect to the monopile (6) during landing the platform installation tool onto the top side (10) of the monopile, wherein the landing device (80) preferably comprises a ring-shaped landing surface (82) at the base frame (21).

12. Platform installation tool (20) according to any one of the preceding claims, wherein the base frame (21) is substantially cylindrical, wherein the base frame (21) preferably has a base frame outer diameter (D6) that matches the outer diameter (D1) of the monopile (5).

13. Platform installation tool (20) according to any one of the preceding claims, wherein operation of the platform installation tool (20) is controlled remotely.

14. Method for installing an internal monopile platform (5) at the inside of a monopile (6) and an external monopile platform (4) at the outside of the monopile (6) using the platform installation tool (20) according to any one of the preceding claims, wherein the method comprises the following steps:
landing the platform installation tool (20) that is loaded with the external monopile platform (4) and the internal monopile platform (5) onto a top side (10) of the monopile;
lowering the internal monopile platform (5) through the monopile by the internal monopile platform hoist (43) to install the internal monopile platform inside the monopile, and lowering the external monopile platform (4) along the monopile by the external monopile platform hoist (41) to install the external monopile platform around the monopile;
rotating the rotating frame (30) with respect to the base frame (21) around the centerline (C) by the rotation drive (34) to align the external monopile platform (5) with the monopile;
rotating the rotating frame with respect to the base frame around the centerline by the rotation drive to align the internal monopile platform (4) with the monopile;
wherein the internal monopile platform (4) co-rotates with the external monopile platform (5) before the external monopile platform is installed at the outside of the monopile (6), or wherein the external monopile platform (5) co-rotates with the internal monopile platform (4) before the internal monopile platform is installed at the inside of the monopile (6).

15. Method according to claim 14, wherein the installation of the external monopile platform (4) at the outside of the monopile (6) is prior to the installation of the internal monopile platform (5) at the inside of the monopile (6).
